# EUROPEAN PATENT APPLICATION

(11) **EP 4 475 232 A1**
(43) Date of publication of application: **11.12.2024**
(21) Application number: 24165458.1
(22) Date of filing: 22.03.2024
(51) Int. Cl.: H01M 4/62, H01M 10/0567

(54) **ELECTROLYTE FOR RECHARGEABLE LITHIUM BATTERY AND RECHARGEABLE LITHIUM BATTERY INCLUDING THE SAME**

(30) Priority: 08.06.2023 KR 20230073471
(71) Applicant: Samsung SDI Co., Ltd., Yongin-si, Gyeonggi-do 17084 (KR)
(72) Inventor: Son, Seunghyeon, 17084 Yongin-si, Gyeonggi-do (KR); Bae, Tae Hyon, 17084 Yongin-si, Gyeonggi-do (KR); Kim, Sanghyung, 17084 Yongin-si, Gyeonggi-do (KR); Kim, Yunhee, 17084 Yongin-si, Gyeonggi-do (KR); Yu, Arum, 17084 Yongin-si, Gyeonggi-do (KR); Lee, Harim, 17084 Yongin-si, Gyeonggi-do (KR)
(74) Representative: Gulde & Partner

(57) **Abstract**

An electrolyte for a rechargeable lithium battery includes a non-aqueous organic solvent, a lithium salt, and an additive, wherein the additive includes a composition including a first compound and a second compound, the first compound is an imide cesium salt compound represented by Chemical Formula 1, and the second compound is a crown ether compound represented by Chemical Formula 2. Details of Chemical Formulae 1 and 2 are as described in the specification.

## Description

### BACKGROUND

### 1. Field

One or more aspects of embodiments of the present disclosure relate to an electrolyte for a rechargeable lithium battery and a rechargeable lithium battery including the same.

### 2. Description of the Related Art

A rechargeable lithium battery may be recharged and may have three or more times higher (i.e., has at least three times more) energy density per unit of weight than a comparable lead storage battery, nickel-cadmium battery, nickel hydrogen battery, nickel zinc battery and/or the like. It may be also charged at a relatively high rate and thus, may be commercially manufactured for a laptop, a cell phone, an electric tool, an electric bike, and/or the like. Research on further improvement of additional energy density has been actively made and/or pursued.

A rechargeable lithium battery may be manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

One of the recent development directions for a rechargeable lithium battery has been rapid charging. However, if a rechargeable lithium battery is rapidly charged, lithium dendrite is precipitated on the surface of the negative electrode, and the cycle-life characteristics of the rechargeable lithium battery may be deteriorated due to the negative electrode surface precipitates.

### SUMMARY

The invention is defined by the appended claims. The description that follows is subjected to this limitation. Any disclosure lying outside the scope of said claims is only intended for illustrative as well as comparative purposes. Additional aspects will be set forth in part in the description which follows and, in part, will be apparent from the description, or may be learned by practice of the presented embodiments of the disclosure. One or more aspects of embodiments of the present invention are directed toward an electrolyte for a rechargeable lithium battery that improves rapid charging performance and improves cycle-life characteristics even during rapid charging.

One or more aspects of embodiments of the present disclosure are directed toward a rechargeable lithium battery that can attain improved cycle-life characteristics even during rapid charging by applying the electrolyte.

One or more embodiments of the present invention provide for an electrolyte for a rechargeable lithium battery including a non-aqueous organic solvent, a lithium salt, and an additive, wherein the additive includes a composition including a first compound and a second compound, the first compound is an imide cesium salt compound represented by Chemical Formula 1 and the second compound is a crown ether compound represented by Chemical Formula 2, and for a rechargeable lithium battery including the electrolyte:

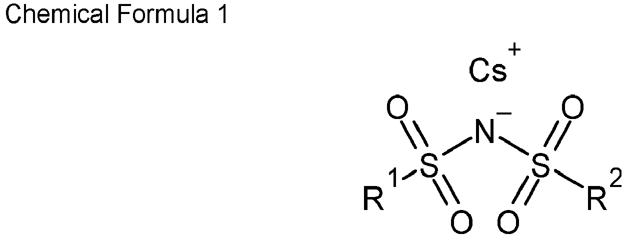

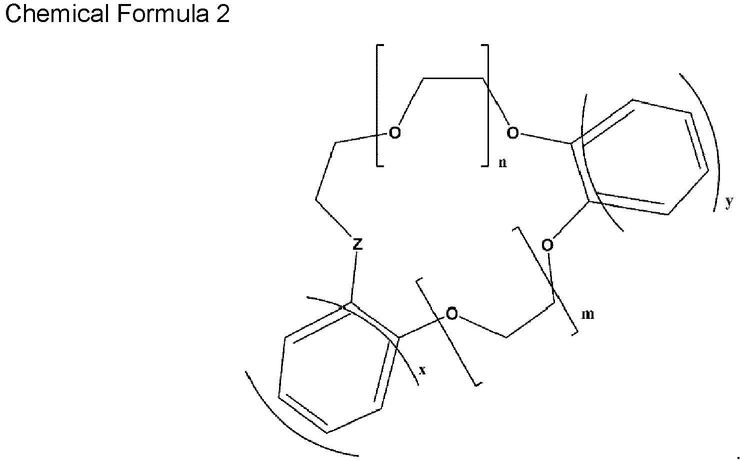

In some example embodiments, by combining the first compound which may improve the rapid charging characteristics of a rechargeable lithium battery; and the second compound which may increase a solubility of the first compound at a set or specific weight ratio, the rapid charging performance of a rechargeable lithium battery can be further improved and desirable or suitable cycle-life characteristics can be secured even during rapid charging.

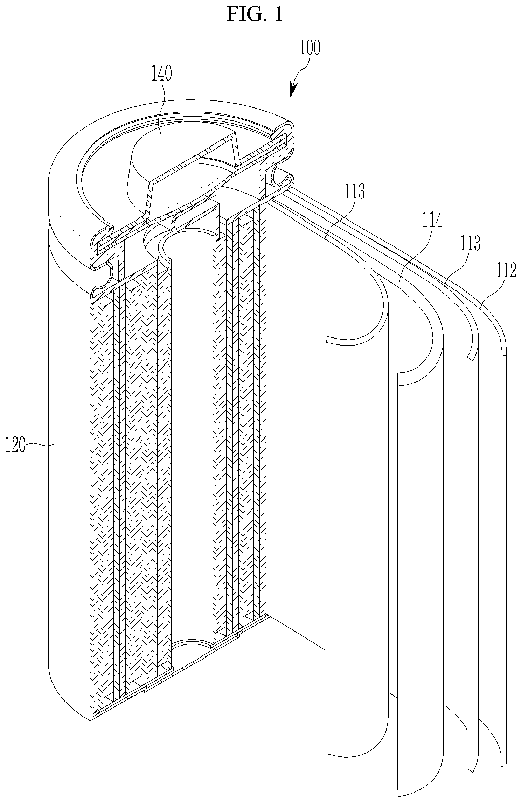

### BRIEF DESCRIPTION OF THE DRAWING

The drawing is a schematic view illustrating a rechargeable lithium battery according to some example embodiments.

### DETAILED DESCRIPTION

Hereinafter, a rechargeable lithium battery according to some example embodiments will be described in more detail with reference to the accompanying drawings.

As utilized herein, when specific definition is not otherwise provided, "substituted" refers to replacement of at least one hydrogen of a substituent or a compound by deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

For example, "substituted" may refer to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In some embodiments, "substituted" refers to replacement of at least one hydrogen of a substituent or a compound by deuterium, a halogen group, a C1 to C20 alkyl group, a C6 to C30 aryl group, a C1 to C10 fluoroalkyl group, or a cyano group. In some embodiments, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In some embodiments, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery may be classified into a lithium ion battery, a lithium ion polymer battery, and/or a lithium polymer battery depending on kinds of a separator and/or an electrolyte. It also may be classified to be cylindrical, prismatic, coin-type or kind, pouch-type or kind, and/or the like depending on its shape. In some embodiments, it may be bulk type or kind and/or thin film type or kind depending on its size. Structures and manufacturing methods for the batteries pertaining to this disclosure should be well understood by those of ordinary skill in the art.

Herein, as an example of a rechargeable lithium battery, a cylindrical rechargeable lithium battery is for example described. The drawing schematically shows the structure of a rechargeable lithium battery according to one or more example embodiments. Referring to the drawing, a rechargeable lithium battery 100 according to some example embodiments includes a battery cell including a positive electrode 114; a negative electrode 112 facing the positive electrode 114, a separator 113 between the positive electrode 114 and the negative electrode 112, and an electrolyte impregnating the positive electrode 114, the negative electrode 112, and the separator 113; a battery case 120 housing the battery cell, and a sealing member 140 sealing the battery case 120.

Hereinafter, a more detailed configuration of the rechargeable lithium battery 100 according to some example embodiments will be described.

A rechargeable lithium battery includes an electrolyte, a positive electrode, and a negative electrode.

The electrolyte includes a non-aqueous organic solvent, a lithium salt, and an additive. The additive may be a composition including a first compound and a second compound, wherein the first compound is an imide cesium salt compound represented by Chemical Formula 1 and the second compound is a crown ether compound represented by Chemical Formula 2.

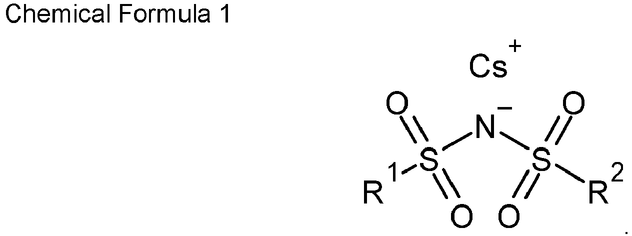

In Chemical Formula 1, R¹ and R² are each independently fluorine or a C1 to C3 fluoroalkyl group substituted with at least one fluorine; provided that at least one of R¹ or R² is a fluorine;

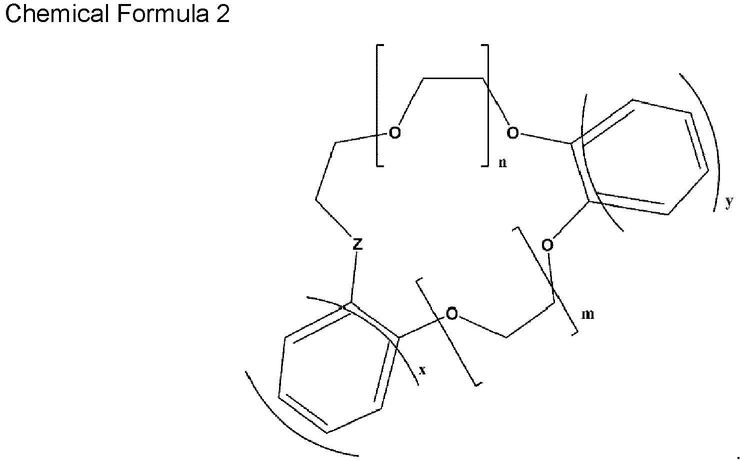

In Chemical Formula 2, Z is O or NH; x and y each independently an integer of 0 or 1; and m and n ate each independently one of integers of 1 to 3.

The first compound, which an imide cesium salt compound represented by Chemical Formula 1, may be earlier (e.g., faster) reduced and decomposed than a carbonate-based solvent included in the non-aqueous organic solvent, and thus may form a SEI (solid electrolyte interface) film on the negative electrode to prevent or reduce decomposition of the electrolyte and the resulting decomposition reaction of the electrode, thus improving rapid charging performance.

However, the first compound is present in the form of a salt and thus exhibits sharply or relatively deteriorated solubility at a set or certain concentration in the electrolyte, somewhat deteriorating or reducing the effect of improving high temperature characteristics.

The second compound is a crown ether compound represented by Chemical Formula 2 and if utilized with the first compound, may contribute to improving the solubility of the first compound and resultantly, may activate a mechanism that (e.g., a reaction by which) the first compound is reduced and decomposed to form the SEI film on the negative electrode and thereby, secure suitable cycle-life characteristics of the rechargeable lithium battery even during the rapid charging.

The composition of the present embodiments includes the first compound, and the second compound at a weight ratio of 1:4 to 1:10.

For example, if the second compound is included in a too small amount below (e.g., outside) the above range, the first compound may not be suitably dissolved, and if the second compound is included in an excessive amount above (e.g., outside) the above range, the first compound may then be included in a rather (relatively) small amount, and thus rapid charging characteristics may not be suitably or sufficiently exhibited.

In some example embodiments, the composition may include the first compound and the second compound at a weight ratio of 1:4 to 1:10, 1:4 to 1:9, or 1:4 to 1:8. Within any of these ranges, a degree of improvement in rapid charging characteristics due to the synergistic effect of the combination of the first compound and the second compound can be maximized or increased.

For example, by combining the first compound for improving the fast charging characteristics of a rechargeable lithium battery, and the second compound for increasing a solubility of the first compound, at a set or specific weight ratio, a more stable negative electrode SEI can be formed. Accordingly, a side reaction between the lithium ions intercalated in the negative electrode and the electrolyte may be effectively or suitably suppressed or reduced even in a rapid charging situation, thereby improving the rapid charging performance of the rechargeable lithium battery and ensuring suitable cycle-life characteristics even during rapid charging.

Hereinafter, the electrolyte for a rechargeable lithium battery will be described in more detail.

In the imide cesium salt compound represented by Chemical Formula 1 (hereinafter referred to as "the first compound"), the fluoro group directly linked to the sulfone forms a stable SEI film, and thus the effect of improving rapid charging characteristics can be significantly improved.

For example, R¹ may be fluorine; R² may be a fluorine, a C1 fluoroalkyl group substituted with three fluorine, a C2 fluoroalkyl group substituted with five fluorine, or a C3 fluoroalkyl group substituted with seven fluorine.

Representative examples of the first compounds are as follows:

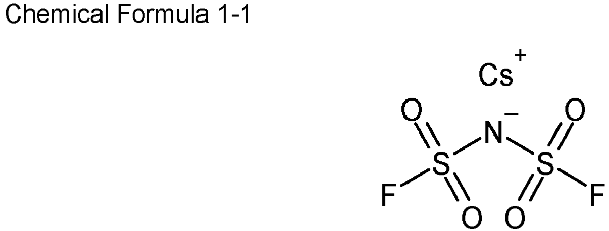

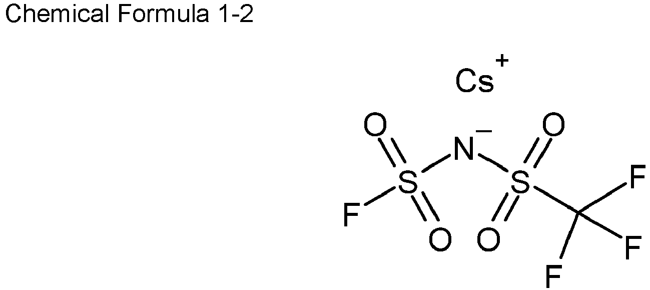

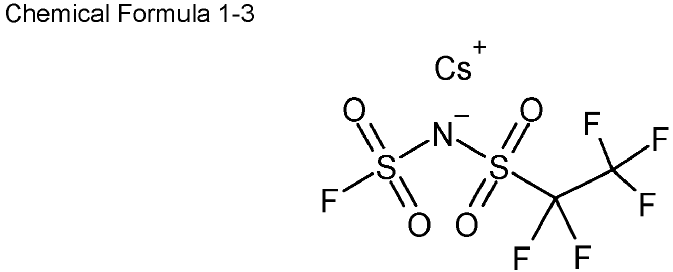

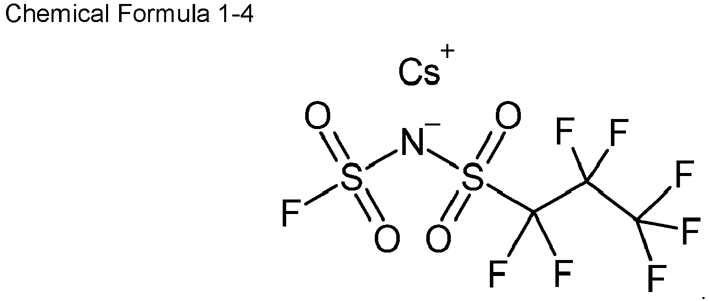

Among the compounds exemplified above, in the case of cesium bis(fluorosulfonyl) imide (CsFSI: Cs⁺(FSO₂)₂N⁻) represented by Chemical Formula 1-1, the fluorine atoms are directly linked to the sulfone and are present on both sides (e.g., both sulfone groups), and thus an effect of improving rapid charging characteristics may be more excellently expressed (e.g., rapid charging characteristics may be further improved).

In some embodiments, the second compound acts as a cation receptor for the first compound and contributes to improving solubility.

In this respect, if the second compound has a structure containing at least five ether groups, the solubility of the first compound can be more effectively or suitably improved. If the second compound includes less than 5 ether groups, the solubility of the first compound cannot be effectively or suitable improved, and therefore the desired rapid charging improvement may not be achieved.

For example, the second compound may be a crown ether compound represented by any one of Chemical Formulae 2-1 to 2-3:

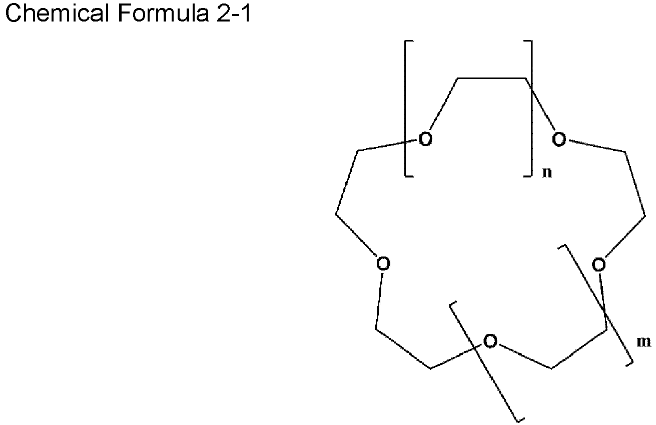

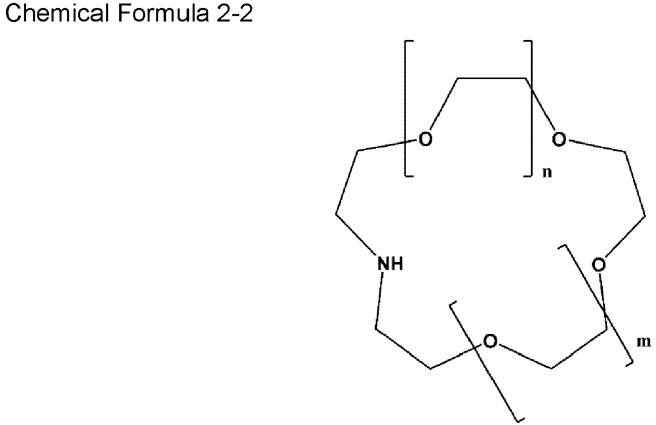

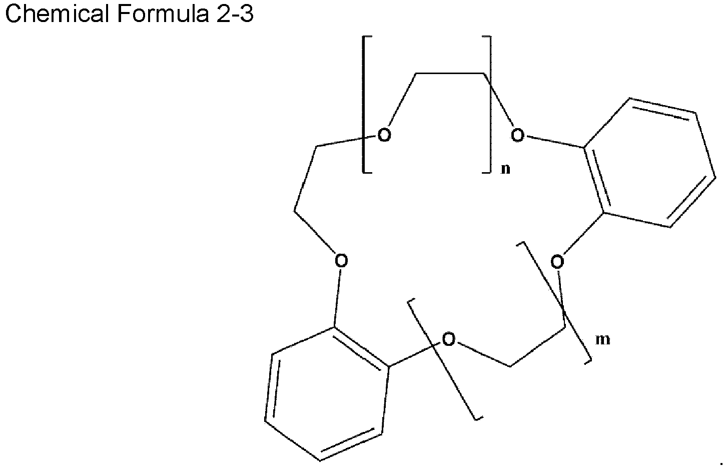

In Chemical Formulae 2-1 to 2-3, m and n may each independently be one of integers of 1 to 3.

For example, the second compound may be at least one selected from among 15-crown-5, 18-crown-6, 21-crown-7, 24-crown-8, dibenzo-15-crown-5, dibenzo-18-crown-6, dibenzo-21-crown-7, dibenzo-24-crown-8, 1-aza-15-crown-5, 1-aza-18-crown-6, 1-aza-21-crown-7, and 1-aza-24-crown-8.

Among the compounds exemplified above, in the case of 18-crown-6, in which m and n in Chemical Formula 2-1 are 1 and 2, respectively, a size of the crown is suitable for trapping the cation of the first compound, so that the first compound may be dissolved more effectively or suitably.

In some embodiments, the first compound may be included in an amount of 0.1 to 2.0 wt%, for example, 0.5 to 2.0 wt%, 0.5 to 1.5 wt%, 0.7 to 2.0 wt%, or 0.7 to 1.0 wt% based on 100 wt% of the electrolyte for a rechargeable lithium battery.

In some embodiments, the second compound may be included in an amount of 0.1 to less than 10 wt%, for example 0.1 to 8.0 wt%, 0.5 to 8.0 wt%, 1.0 to 8.0 wt%, 2.8 to 8 wt%, or 4.0 to 8.0 wt% based on 100 wt% of the electrolyte for a rechargeable lithium battery.

The composition including the first compound and the second compound may be included in an amount of 0.5 to less than 10 wt%, for example 1.0 to less than 10 wt%, 2.0 to less than 10 wt%, or 2.5 to less than 10 wt% based on 100 wt% of the electrolyte for a rechargeable lithium battery.

In one or more embodiments, the composition includes the first compound and the second compound in a weight ratio of 1:4 to 1:10, and within the above range, the first compound may be included in an amount of 0.7 to 2.0 wt% based on 100 wt% of the electrolyte for a rechargeable lithium battery, and the second compound may be included in an amount of 2.8 to 8 wt% based on 100 wt% of the electrolyte for a rechargeable lithium battery.

In some embodiments, the composition may include the first compound and the second compound in a weight ratio of 1:4 to 1:18, and within the above range, the first compound may be included in an amount of 0.7 to 1.0 wt% based on 100 wt% of the electrolyte for a rechargeable lithium battery, and the second compound may be included in an amount of 4 to 8 wt% based on 100 wt% of the electrolyte for a rechargeable lithium battery

If the content (e.g., amount) of the composition and the content (e.g., amount) of each component in the composition are within their respective above ranges, a rechargeable lithium battery with improved resistance characteristics if stored at high temperature may be implemented.

The lithium salt dissolved in the non-aqueous organic solvent facilitates the supply of lithium ions in a battery, enables a basic operation of a rechargeable lithium battery, and improves transportation of the lithium ions between positive and negative electrodes. Examples of the lithium salt include at least one selected from among LiPF₆, LiBF₄, LiDFOP, LiDFOB, LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₚF₂ₚ₊₁SO₂)(C_{q}F_{2q+1}SO₂), wherein, p and q may each independently be an integer of 1 to 20, LiCl, Lil, and LiB(C₂O₄)₂ (lithium bis(oxalato) borate: LiBOB). The lithium salt may be utilized in a concentration in a range of 0.1 M to 2.0 M. If the lithium salt is included at the above concentration range, an electrolyte may have excellent or suitable performance and/or lithium ion mobility due to optimal or suitable electrolyte conductivity and viscosity.

The non-aqueous organic solvent serves as a medium for transmitting ions taking part in the electrochemical reaction of a battery.

The non-aqueous organic solvent may include at least one of a carbonate-based solvent, an ester-based solvent, an ether-based solvent, a ketone-based solvent, an alcohol-based solvent, and an aprotic solvent.

The carbonate-based solvent may include ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, t-butyl acetate, methylpropionate, ethylpropionate, propylpropionate, decanolide, mevalonolactone, caprolactone, and/or the like. The ether-based solvent may include dibutyl ether, tetraglyme, diglyme, dimethoxyethane, 2-methyltetrahydrofuran, tetrahydrofuran, and/or the like. The ketone-based solvent may include cyclohexanone and/or the like. The alcohol-based solvent may include ethyl alcohol, isopropyl alcohol, and/or the like, and examples of the aprotic solvent include nitriles (such as R-CN (wherein R is a C2 to C20 linear, branched, or cyclic hydrocarbon group, a double bond, an aromatic ring, or an ether bond)), amides (such as dimethylformamide), dioxolanes (such as 1,3-dioxolane), sulfolanes, and/or the like.

The non-aqueous organic solvent may be utilized alone or in combination with one or more of them, and if utilized in combination with one or more, a mixing ratio may be appropriately or suitably adjusted according to the desired or suitable battery performance, which should be well understood by those skilled in the art.

The carbonate-based solvent is prepared by mixing a cyclic carbonate and a chain carbonate. The cyclic carbonate and chain carbonate are mixed together in a volume ratio of 5:95 to 50:50. If the mixture is utilized as an electrolyte, it may have enhanced performance.

For example, ethylene carbonate (EC) and propylene carbonate (PC) may be utilized as the cyclic carbonate, and propyl propionate (PP) can be utilized as the chain carbonate.

In some embodiments, the non-aqueous organic solvent may include a carbonate-based solvent in which ethylene carbonate (EC), ethylmethyl carbonate (EMC), and dimethyl carbonate (DMC) are mixed. For example, in the carbonate-based solvent, ethylene carbonate (EC), ethylmethyl carbonate (EMC), and dimethyl carbonate (DMC) may be mixed in a volume ratio of EC:EMC:DMC = 1:0.5:5 to 5:3:10, which may further improve performance of the electrolyte.

The non-aqueous organic solvent may further include an aromatic hydrocarbon-based solvent as well as the carbonate-based solvent. The carbonate-based solvent and aromatic hydrocarbon-based solvent may be mixed together in a volume ratio of 1:1 to 30:1.

The aromatic hydrocarbon-based solvent may be an aromatic hydrocarbon-based compound represented by Chemical Formula 3.

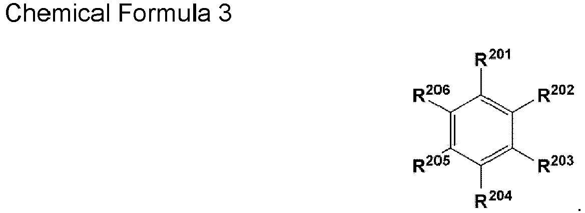

In Chemical Formula 3, R²⁰¹ to R²⁰⁶ may each independently be the same or different and may be selected from among hydrogen, a halogen, a C1 to C10 alkyl group, a haloalkyl group, and combinations thereof.

Examples of the aromatic hydrocarbon-based solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylene carbonate, vinyl ethylene carbonate, and/or an ethylene-based carbonate-based compound of Chemical Formula 4 to further improve cycle-life of a battery as an additive for improving a cycle-life.

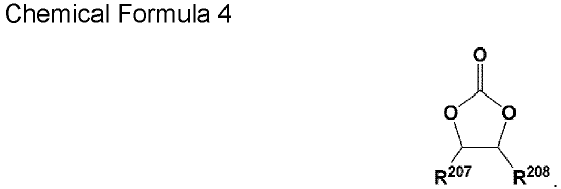

In Chemical Formula 4, R²⁰⁷ and R²⁰⁸ may each independently be the same or different and may be selected from among hydrogen, a halogen, a cyano group (CN), a nitro group (NO₂), and a C1 to C5 fluoroalkyl group, provided that at least one of R²⁰⁷ or R²⁰⁸ is a halogen, a cyano group (CN), a nitro group (NO₂), or a C1 to C5 fluoroalkyl group, and R²⁰⁷ and R²⁰⁸ are not concurrently (e.g., simultaneously) hydrogen.

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, and fluoroethylene carbonate. The amount of the additive for improving cycle-life may be utilized within an appropriate or suitable range.

Some example embodiments provide a rechargeable lithium battery including a positive electrode including a positive electrode active material; a negative electrode containing a negative electrode active material; and the electrolyte according to the present embodiments.

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions.

For example, at least one composite oxide of lithium and a metal of cobalt, manganese, nickel, or a combination thereof may be utilized.

The composite oxide having a coating layer on the surface thereof may be utilized, or a mixture of the composite oxide and the composite oxide having a coating layer may be utilized. The coating layer may include a coating element compound selected from among oxide of a coating element, hydroxide of a coating element, oxyhydroxide of a coating element, oxycarbonate of a coating element, or hydroxycarbonate of a coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any suitable processes as long as it does not cause any side effects (e.g., any substantial side effects) on the properties of the positive electrode active material. For example, the coating process may be spray coating, dipping, etc., which should be well understood by persons having ordinary skill in this art, and thus a detailed description thereof is not provided.

For example, the positive electrode active material may include lithium cobalt oxide.

The lithium cobalt oxide has lower wettability compared to other positive electrode active materials and may impair storage characteristics of a rechargeable lithium battery including the same at a high temperature. However, in some example embodiments, by combining the electrolyte additive and the positive electrode conductive material of the present embodiments, even if lithium cobalt oxide is utilized as the positive electrode active material, the high temperature storage characteristics of the rechargeable lithium battery are improved, and the initial resistance and the increase in resistance during high-temperature storage can be more effectively or suitably suppressed or reduced.

In some embodiments, the positive electrode active material may include lithium cobalt oxide, represented by Chemical Formula 3:

Chemical Formula 3 Liₐ₁₁COₓ₁₁M¹¹_{y11}O₂.

In Chemical Formula 3, 0.9≤a11≤1.8, 0.9≤x11≤1, 0≤y11≤0.1, x11+y11=1, and M¹¹ is selected from among Al, B, Ce, Cr, F, Mg, Mn, Mo, Nb, P, S, Si, Sr, Ti, V, W, Zr, and combinations thereof.

For example, the positive electrode active material may be LiCoO₂.

In a positive electrode according to some example embodiments, a content (e.g., amount) of the positive electrode active material may be 50 wt% to 99 wt%, 60 wt% to 99 wt%, 70 wt% to 99 wt%, 80 wt% to 99 wt%, or 90 wt% to 99 wt% based on a total weight of the positive electrode active material layer.

In some example embodiments of the present disclosure, the positive electrode active material layer may optionally include a conductive material and a binder. In this case, content (e.g., amount) of the conductive material and the binder may each independently be 1.0 wt% to 5.0 wt%, based on a total weight of the positive electrode active material layer.

The conductive material is utilized to impart conductivity to the negative electrode, and any suitable electrically conductive material may be utilized as a conductive material so long as it does not cause a substantial chemical change in a battery. Examples of the conductive material may include a carbon-based material (such as natural graphite, artificial graphite, carbon black, acetylene black, Ketjen black, carbon fiber, and/or the like); a metal-based material of a metal powder and/or a metal fiber including copper, nickel, aluminum, silver, and/or the like; a conductive polymer (such as a polyphenylene derivative); or a mixture thereof.

The binder improves binding properties of positive electrode active material particles with one another and with a current collector and examples thereof may include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but are not limited thereto.

The positive electrode current collector may include Al, but is not limited thereto.

The negative electrode includes a negative electrode current collector and a negative electrode active material layer including the negative electrode active material on the negative electrode current collector.

The negative electrode active material may be a material that can reversibly intercalate/deintercalate lithium ions, a lithium metal, a lithium metal alloy, a material capable of doping and dedoping lithium, and/or a transition metal oxide.

The material that reversibly intercalates/deintercalates lithium ions may include carbon materials. The carbon material may be any suitable carbon-based negative electrode active material in a rechargeable lithium battery. Examples of the carbon material may include crystalline carbon, amorphous carbon, and a combination thereof. The crystalline carbon may be non-shaped, or may be sheet, flake, spherical, and/or fiber shaped natural graphite and/or artificial graphite. The amorphous carbon may be a soft carbon, a hard carbon, a mesophase pitch carbonized product, fired coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping and dedoping lithium may include Si, SiOₓ (0 < x ≤ 2), a Si-Q alloy (wherein Q is selected from among an alkali metal, an alkaline-earth metal, a Group 13 element, a Group 14 element, a Group 15 element, a Group 16 element, a transition metal, a rare earth element, and combinations thereof, and is not Si), Sn, SnO₂, a Sn-R alloy (wherein R is an alkali metal, an alkaline-earth metal, a Group 13 element, a Group 14 element, a Group 15 element, a Group 16 element, a transition element, a rare earth element, or a combination thereof, and is not Sn), and/or the like. At least one of them may be mixed with SiO₂.

The elements Q and R may be selected from among Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

The transition metal oxide may be a vanadium oxide, a lithium vanadium oxide, and/or the like.

In some example embodiments, the negative electrode active material may include at least one of graphite or a Si composite.

The Si composite may include a core including Si-containing particles and amorphous carbon, and for example, the Si-containing particles may include at least one of Si-C composite, SiOₓ (0 < x ≤ 2), or an Si alloy.

For example, the Si-C composite may include a core including Si particles and amorphous carbon.

The central portion of the core may include pores, and the radius of the central portion may correspond to 30% to 50% of the radius of the Si-C composite.

The Si particles may have an average particle diameter of 10 nm to 200 nm.

As utilized herein, the average particle diameter (D50) may be a particle size (e.g., diameter of particles) at a volume ratio of 50% in a cumulative size-distribution curve. The average particle size D50 may be measured by a suitable technique, e.g., using a particle size analyzer, transmission electron microscope photography, and/or scanning electron microscope photography. Another method may be performed by using a measuring device with dynamic light scattering, analyzing data to count a number of particles relative to each particle size, and then calculating to obtain an average particle diameter D50. In the present specification, when particles are spherical, "diameter" indicates a particle diameter, and when the particles are non-spherical, the "diameter" indicates a major axis length.

When the average particle diameter of the Si particle is within the above range, volume expansion occurring during charging and discharging may be suppressed or reduced, and a disconnection of a conductive path due to particle crushing during charging and discharging may be prevented or reduced.

The Si particle may be included in an amount of 1 wt% to 60 wt%, for example, 3 wt% to 60 wt%, based on a total weight of the Si-C composite.

The central portion may not include (e.g., may exclude) amorphous carbon, but the amorphous carbon may be present on the surface portion (e.g., only on the surface portion) of the negative electrode active material.

Herein, the surface portion indicates a region from the central portion of the negative electrode active material to the outermost surface of the negative electrode active material.

In some embodiments, the Si particles are substantially uniformly included over the negative electrode active material, for example, are present at a substantially uniform concentration in the central portion and the surface portion thereof.

The amorphous carbon may be (e.g., may include) soft carbon, hard carbon, mesophase pitch carbonized product, calcined coke, or a combination thereof.

The negative electrode active material may further include crystalline carbon.

When the negative electrode active material includes a Si-C composite and crystalline carbon together, the Si-C composite and crystalline carbon may be included in the form of a mixture, and in this case, the Si-C composite and crystalline carbon may be included in a weight ratio of 1:99 to 50:50. For example, the Si-C composite and crystalline carbon may be included in a weight ratio of 3 : 97 to 20 : 80, or 5 : 95 to 20 : 80.

The crystalline carbon may be, for example, graphite, and may be natural graphite, artificial graphite, or a mixture thereof.

The crystalline carbon may have an average particle diameter of 5 µm to 30 µm.

The amorphous carbon precursor may include a coal-based pitch, mesophase pitch, petroleum-based pitch, coal-based oil, petroleum-based heavy oil, and/or a polymer resin such as a phenol resin, a furan resin, and/or a polyimide resin.

In the negative electrode active material layer, the negative electrode active material may be included in an amount of 95 wt% to 99 wt% based on a total weight of the negative electrode active material layer.

In some example embodiments, the negative electrode active material layer may include a binder, and optionally, a conductive material. In the negative electrode active material layer, the amount of the binder may be 1 wt% to 5 wt% based on a total weight of the negative electrode active material layer. When the negative electrode active material layer further includes the conductive material, it may include 90 wt% to 98 wt% of the negative electrode active material, 1 wt% to 5 wt% of the binder, and 1 wt% to 5 wt% of the conductive material.

The binder improves binding properties of negative electrode active material particles with one another and with a current collector. The binder may be (e.g., may include) a non-water-soluble binder, a water-soluble binder, or a combination thereof.

The non-water-soluble binder may be (e.g., may include) polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be (e.g., may include) a rubber-based binder and/or a polymer resin binder. The rubber-based binder may be selected from among a styrene-butadiene rubber, an acrylated styrene-butadiene rubber (SBR), an acrylonitrile-butadiene rubber, an acrylic rubber, a butyl rubber, a fluorine rubber, and combinations thereof. The polymer resin binder may be selected from among polytetrafluoroethylene, ethylenepropylene copolymer, polyethyleneoxide, polyvinylpyrrolidone, polyepichlorohydrin, polyphosphazene, polyacrylonitrile, polystyrene, an ethylene propylenediene copolymer, polyvinylpyridine, chlorosulfonatedpolyethylene, latex, a polyester resin, an acrylic resin, a phenolic resin, an epoxy resin, polyvinylalcohol, and combinations thereof.

If the water-soluble binder is utilized as the negative electrode binder, a cellulose-based compound may be further utilized to provide viscosity as a thickener. The cellulose-based compound includes one or more of carboxymethyl cellulose, hydroxypropylmethyl cellulose, methyl cellulose, or alkali metal salts thereof. The alkali metal may be Na, K, and/or Li. The thickener may be included in an amount of 0.1 to 3 wt% based on 100 wt% of the negative electrode active material.

The conductive material may be included to provide electrode conductivity and any suitable electrically conductive material may be utilized as a conductive material so long as it does not cause a substantial chemical change in the battery. Examples thereof may include a carbon-based material (such as natural graphite, artificial graphite, carbon black, acetylene black, Ketjen black, carbon fiber and/or the like); a metal-based material (such as a metal powder or a metal fiber of copper, nickel, aluminum, silver, and/or the like); a conductive polymer (such as a polyphenylene derivative and/or the like), or a mixture thereof.

The negative electrode current collector may be selected from among a copper foil, a nickel foil, a stainless steel foil, a titanium foil, a nickel foam, a copper foam, a polymer substrate coated with a conductive metal, and combinations thereof.

The rechargeable lithium battery may further include a separator between the negative electrode and the positive electrode, depending on a type or kind of the rechargeable lithium battery. The separator may be (e.g., may include) a porous substrate; or it may be a composite porous substrate.

The porous substrate may be (e.g., may include) a substrate including pores, and lithium ions may move through the pores. The porous substrate may be (for example may include) polyethylene, polypropylene, polyvinylidene fluoride, and/or multi-layers thereof such as a polyethylene/polypropylene double-layered separator, a polyethylene/polypropylene/polyethylene triple-layered separator, and/or a polypropylene/polyethylene/polypropylene triple-layered separator.

The composite porous substrate may have a form including a porous substrate and a functional layer on the porous substrate. The functional layer may be, for example, at least one of a heat-resistant layer or an adhesive layer, from the viewpoint of enabling additional function. For example, the heat-resistant layer may include a heat-resistant resin and, optionally, a filler.

In some embodiments, the adhesive layer may include an adhesive resin and, optionally, a filler.

The filler may be an organic filler and/or an inorganic filler.

Referring to the drawing, a rechargeable lithium battery 100 according to some example embodiments includes a battery cell including a negative electrode 112, a positive electrode 114 facing the negative electrode 112, a separator 113 provided between the negative electrode 112 and the positive electrode 114, and an electrolyte immersed in the negative electrode 112, positive electrode 114 and separator 113; a battery case 120 housing the battery cell, and a sealing member 140 sealing the battery case 120.

Hereinafter, examples and comparative examples of the present disclosure will be described. The following examples are only examples of the present disclosure, and the present disclosure is not limited to the following examples.

### Preparation of Electrolyte

### Example 1

Ethylene carbonate: propylene carbonate: propyl propionate (EC:PC:PP) were mixed in a volume ratio of 10:15:75 to prepare a non-aqueous organic solvent, 1.3 M LiPF₆ was dissolved therein, and a composition including a first compound and a second compound in a weight ratio of 1:4 was added thereto.

As for the first compound, cesium bis(fluorosulfonyl) imide (CsFSI: Cs⁺ FSO₂₂N⁻) was utilized, and as for the second compound, 18-crown-6 was utilized.

The composition including the first compound and the second compound in a weight ratio of 1:4 was included in an amount of 3.5 wt% based on 100 wt% of an electrolyte for a rechargeable lithium battery.

(As used herein, in the electrolyte composition, "wt%" refers to a relative weight of the additives based on 100 wt% of the entire electrolyte (a lithium salt + a non-aqueous organic solvent + additives).)

### Example 2

An electrolyte was prepared in substantially the same manner as in Example 1 except that the composition including the first compound and the second compound in a weight ratio of 1:4 was utilized in the amount of 5 wt% based on 100 wt% of the electrolyte for a rechargeable lithium battery.

### Example 3

An electrolyte was prepared in substantially the same manner as in Example 1 except that the composition including the first compound and the second compound in a weight ratio of 1:4 was utilized in the amount of 10 wt% based on 100 wt% of the electrolyte for a rechargeable lithium battery.

### Example 4

An electrolyte was prepared in substantially the same manner as in Example 1 except that the composition including the first compound and the second compound in a weight ratio of 1:8 was utilized in the amount of 9 wt% based on 100 wt% of the electrolyte for a rechargeable lithium battery.

### Example 5

An electrolyte was prepared in substantially the same manner as in Example 1 except that the composition including the first compound and the second compound in a weight ratio of 1:10 was utilized in the amount of 7.7 wt% based on 100 wt% of the electrolyte for a rechargeable lithium battery.

### Comparative Example 1

An electrolyte was prepared in substantially the same manner as in Example 1 except that the first compound and the second compound were not utilized at all.

### Comparative Example 2

An electrolyte was prepared in substantially the same manner as in Example 1 except that the first compound alone was utilized in an amount of 0.5 wt% based on 100 wt% of the electrolyte for a rechargeable lithium battery.

### Comparative Example 3

An electrolyte was prepared in substantially the same manner as in Example 1 except that the first compound alone was utilized in an amount of 0.7 wt% based on 100 wt% of the electrolyte for a rechargeable lithium battery.

### Comparative Example 4

An electrolyte was prepared in substantially the same manner as in Example 1 except that the second compound alone was utilized in an amount of 5 wt% based on 100 wt% of the electrolyte for a rechargeable lithium battery.

### Comparative Example 5

An electrolyte was prepared in substantially the same manner as in Example 1 except that the second compound alone was utilized in an amount of 10 wt% based on 100 wt% of the electrolyte for a rechargeable lithium battery.

### Comparative Example 6

An electrolyte was prepared in substantially the same manner as in Example 1 except that the composition including the first compound and the second compound in a weight ratio of 1:2 was utilized in an amount of 2.1 wt% based on 100 wt% of the electrolyte for a rechargeable lithium battery.

### Comparative Example 7

An electrolyte was prepared in substantially the same manner as in Example 1 except that the composition including the first compound and the second compound in a weight ratio of 1:3 was utilized in an amount of 4 wt% based on 100 wt% of the electrolyte for a rechargeable lithium battery.

### Comparative Example 8

An electrolyte was prepared in substantially the same manner as in Example 1 except that the composition including the first compound and the second compound in a weight ratio of 1:15 was utilized in an amount of 11.2 wt% based on 100 wt% of the electrolyte for a rechargeable lithium battery.

### Comparative Example 9

An electrolyte was prepared in substantially the same manner as in Example 1 except that cesium bis(trifluoromethanesulfonyl) imide (CsTFSI: Cs⁺ (CF₃SO₂)₂N⁻) was utilized as the first compound.

For reference, each composition of the additives in the Examples and the Comparative Examples is summarized in Table 1.

**Table 1**

| | First compound | Content of first compound in electrolyte (wt%) | Content of second compound in electrolyte (wt%) | Mixing ratio of first compound: second compound (w:w) |
|---|---|---|---|---|
| Example 1 | CsFSI | 0.7 | 2.8 | 1:4 |
| Example 2 | CsFSI | 1 | 4 | 1:4 |
| Example 3 | CsFSI | 2 | 8 | 1:4 |
| Example 4 | CsFSI | 1 | 8 | 1:8 |
| Example 5 | CsFSI | 0.7 | 7 | 1:10 |
| Comparative Example 1 | CsFSI | - | - | - |
| Comparative Example 2 | CsFSI | 0.5 | - | - |
| Comparative Example 3 | CsFSI | 0.7 | - | - |
| Comparative Example 4 | CsFSI | - | 5 | - |
| Comparative Example 5 | CsFSI | - | 10 | - |
| Comparative Example 6 | CsFSI | 0.7 | 1.4 | 1:2 |
| Comparative Example 7 | CsFSI | 1 | 3 | 1:3 |
| Comparative Example 8 | CsTFSI | 0.7 | 10.5 | 1:15 |

### Evaluation 1: Evaluation of Dissolution of Additives in Electrolyte

In each electrolyte of Examples 1 to 5 and Comparative Examples 1 to 8, whether or not the additives were dissolved was checked, and the results are shown in Table 2.

For example, after adding the first compound and the second compound to a basic electrolyte and stirring the obtained mixture for one day or more, the mixture was evaluated for whether there were residues or not. If there were no residues, O (dissolved) was given, but if there were residues, X (not dissolved) was given.

**Table 2**

| | Dissolution of Additives in Electrolyte |
|---|---|
| Example 1 | O |
| Example 2 | O |
| Example 3 | O |
| Example 4 | O |
| Example 5 | O |
| Comparative Example 1 | (No additives) |
| Comparative Example 2 | O |
| Comparative Example 3 | X |
| Comparative Example 4 | O |
| Comparative Example 5 | X |
| Comparative Example 6 | X |
| Comparative Example 7 | X |
| Comparative Example 8 | X |

Referring to Table 2, in Examples 1 to 5, the additives were all dissolved in the electrolyte, but in most of Comparative Examples 1 to 8, the additives were not all dissolved in the electrolyte.

For example, looking at Comparative Examples 2 to 5, if either only the first compound or only the second compound is utilized, it should be utilized in a suitably small amount to be dissolved in the electrolyte. For example, Comparative Example 3, in which the additives were not all dissolved, had a larger amount of the first compound than Comparative Example 2, in which the additives were dissolved. And Comparative Example 5, in which the additives were not all dissolved, had a larger amount of the second compound than Comparative Example 4, in which the additives were dissolved.

Further, looking at Examples 1 to 5 and Comparative Examples 6 to 8, if the first compound and second compound were combined and controlled or selected within a weight ratio range of 1:4 to 1:10, the additives were well dissolved in the electrolyte.

### Evaluation 2: Rapid Cycle-life Characteristics of Rechargeable Lithium Battery Cells at Room Temperature

LiCoO₂ as a positive electrode active material, polyvinylidene fluoride as a binder, and Ketjen black as a conductive material were mixed respectively in a weight ratio of 97:2:1, and then, dispersed in N-methyl pyrrolidone to prepare positive electrode active material slurry.

The positive electrode active material slurry was coated on a 15 µm-thick Al foil, dried at 110 °C, and pressed to manufacture a positive electrode.

A mixture of artificial graphite and a Si-C composite in a weight ratio of 93:7 was prepared as a negative electrode active material, and the negative electrode active material, a styrene-butadiene rubber as a binder, and carboxymethyl cellulose as thickener in a weight ratio of 97:1:2 were dispersed in distilled water to prepare negative electrode active material slurry.

The Si-C composite includes a core including artificial graphite and silicon particles, and a coal pitch coated on the surface of the core.

The negative electrode active material slurry was coated on a 10 µm-thick Cu foil, dried at 100 °C, and pressed to manufacture a negative electrode.

An electrode assembly was manufactured by assembling the manufactured positive electrode and negative electrode and a 25 µm-thick polyethylene separator, and the rechargeable lithium battery cells were manufactured by injecting the electrolytes of Examples 1 to 5, and Comparative Examples 1, 2, and 4, respectively.

Each of the rechargeable lithium battery cells utilizing the electrolytes of Examples 1 to 5 and Comparative Examples 1, 2, and 4 was evaluated with respect to room temperature rapid cycle-life characteristics, and the results are shown in Table 3.

For example, the cells were 200 times charged discharged under the charge condition of CC-CV 3.0 C/4.5 V and 1.0 C cut-off and the discharge condition of CV 1.0 C and 3.0 V cut-off in a constant temperature chamber at 25 °C to measure capacity retention.

**Table 3**

| | Rapid cycle-life characteristics at room temperature (capacity retention @ 200 cy, 25 °C) |
|---|---|
| Example 1 | 85 % |
| Example 2 | 88 % |
| Example 3 | 91 % |
| Example 4 | 87 % |
| Example 5 | 83 % |
| Comparative Example 1 | 73 % |
| Comparative Example 2 | 81 % |
| Comparative Example 4 | 79 % |

Referring to Table 3, the rechargeable lithium battery cells of Examples 1 to 5 secured suitable or improved cycle-life characteristics even during the rapid charging, as compared with Comparative Examples 1, 2, and 4, as well as improved the rapid charging performance by, among other things, combining the first compound that improves rapid charging characteristics; and the second compound that increases solubility of the first compound in a set specific weight ratio.

In present disclosure, "not including a or any 'component'" "excluding a or any 'component'", "'component'-free", and/or the like refers to that the "component" not being added, selected, or utilized as a component in the composition, but the "component" of less than a suitable amount may still be included due to other impurities and/or external factors.

In the present disclosure, when particles are spherical, "diameter" indicates a particle diameter or an average particle diameter, and when the particles are non-spherical, the "diameter" indicates a major axis length or an average major axis length.

As used herein, the singular forms "a," "an," and "the" are intended to include the plural forms as well, unless the context clearly indicates otherwise.

It will be further understood that the terms "includes," "including," "comprises," and/or "comprising," when used in this specification, specify the presence of stated features, steps, operations, elements, and/or components, but do not preclude the presence or addition of one or more other features, steps, operations, elements, components, and/or groups thereof.

As used herein, the terms "use," "using," and "used" may be considered synonymous with the terms "utilize," "utilizing," and "utilized," respectively.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

Further, the use of "may" when describing embodiments of the present disclosure refers to "one or more embodiments of the present disclosure".

It will be understood that when an element is referred to as being "on," "connected to," or "coupled to" another element, it may be directly on, connected, or coupled to the other element or one or more intervening elements may also be present. When an element is referred to as being "directly on," "directly connected to," or "directly coupled to" another element, there are no intervening elements present.

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

### Description of Symbols

100: rechargeable lithium battery
112: negative electrode
113: separator
114: positive electrode
120: battery case
140: sealing member

## Claims

1. An electrolyte for a rechargeable lithium battery (100), the electrolyte comprising:
a non-aqueous organic solvent,
a lithium salt, and
an additive,
wherein the additive comprises a composition comprising a first compound and a second compound,
the first compound is an imide cesium salt compound represented by Chemical Formula 1,
the second compound is a crown ether compound represented by Chemical Formula 2, and
the composition comprises the first compound and the second compound at a weight ratio of 1:4 to 1:10: 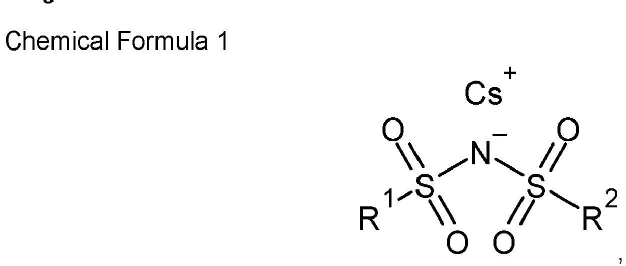
wherein, in Chemical Formula 1,
R¹ and R² are each independently fluorine or a C1 to C3 fluoroalkyl group substituted with at least one fluorine;
provided that at least one of R¹ or R² is fluorine; 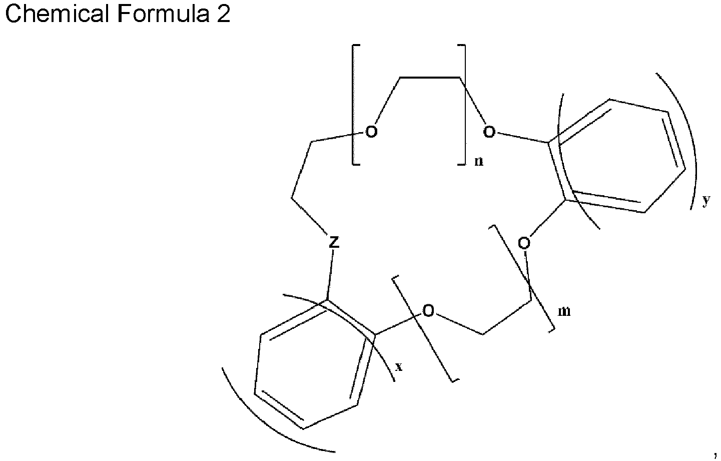 and
wherein, in Chemical Formula 2,
Z isO orNH,
x and y are each independently an integer of 0 or 1, and
m and n are each independently one of integers of 1 to 3.

2. The electrolyte of claim 1, wherein
R¹ is fluorine; and
R² is fluorine, a C1 fluoroalkyl group substituted with three fluorine, a C2 fluoroalkyl group substituted with five fluorine, or a C3 fluoroalkyl group substituted with seven fluorine.

3. The electrolyte of claim 2, wherein
the first compound is represented by any one of Chemical Formulae 1-1 to 1-4:

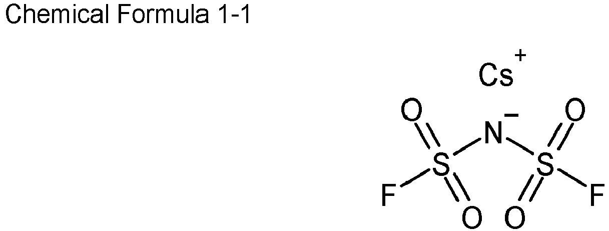

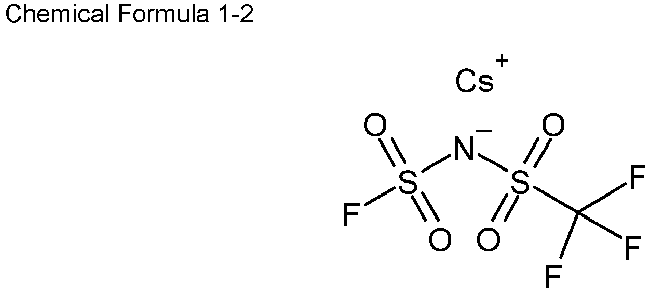

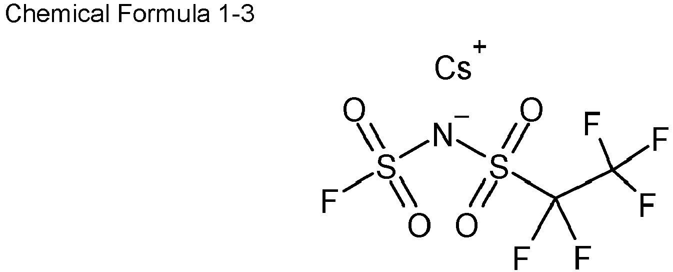

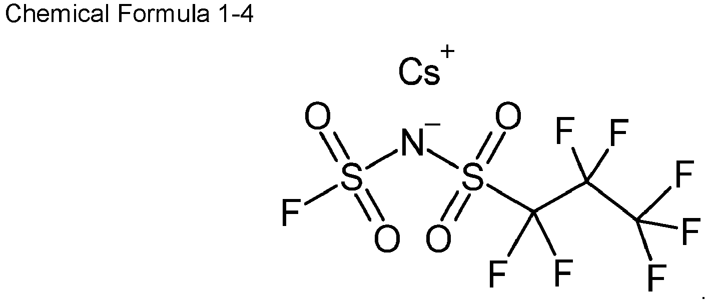

4. The electrolyte of any one of the preceding claims, wherein
the second compound is represented by any one of Chemical Formulae 2-1 to 2-3: 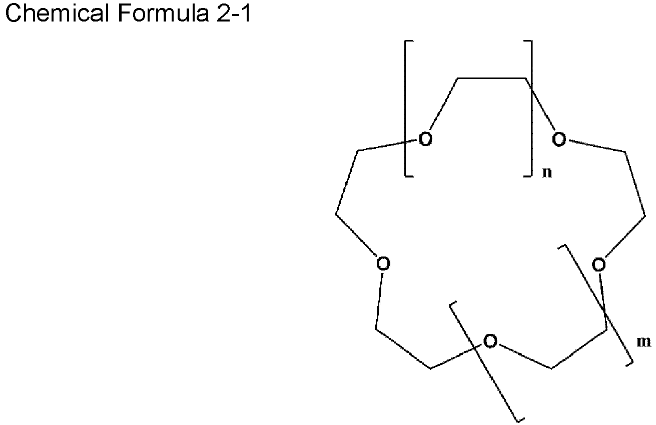 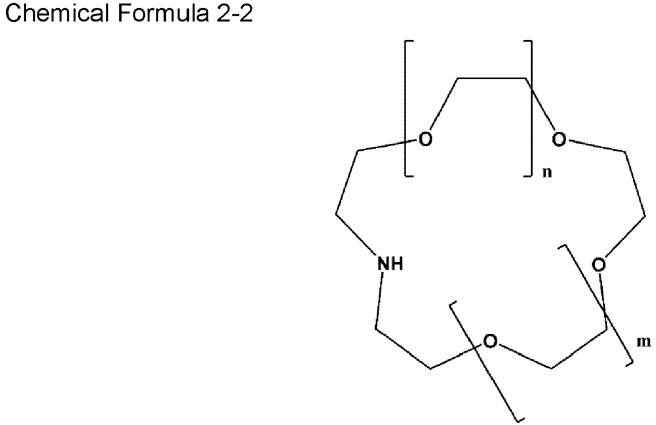 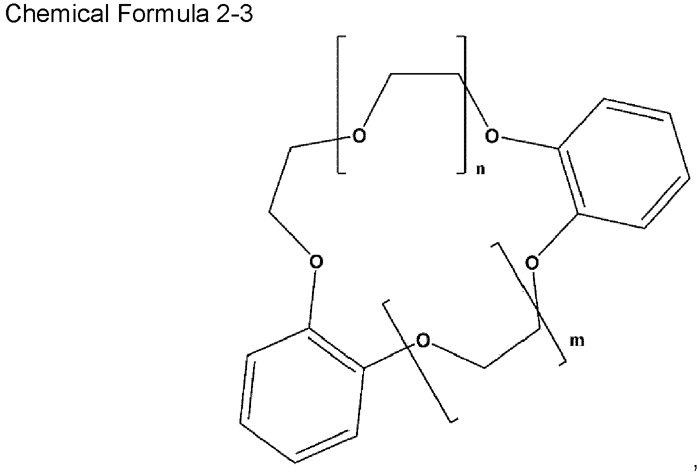 and
wherein, in Chemical Formulae 2-1 to 2-3,
m and n are each independently one of integers of 1 to 3.

5. The electrolyte of claim 4, wherein
the second compound is at least one of 15-crown-5, 18-crown-6, 21-crown-7, 24-crown-8, dibenzo-15-crown-5, dibenzo-18-crown-6, dibenzo-21-crown-7, dibenzo-24-crown-8, 1-aza-15-crown-5, 1-aza-18-crown-6, 1-aza-21-crown-7, or 1-aza-24-crown-8.

6. The electrolyte of any one of the preceding claims, wherein
the first compound is in an amount of 0.1 to 2.0 wt% based on 100 wt% of the electrolyte.

7. The electrolyte of any one of the preceding claims, wherein
the second compound is in an amount of 0.1 to 10 wt% based on 100 wt% of the electrolyte.

8. The electrolyte of any one of the preceding claims, wherein
the composition comprising the first compound and the second compound is included in an amount of 0.5 to 10 wt% based on 100 wt% of the electrolyte.

9. The electrolyte of any one of the preceding claims, wherein
the non-aqueous organic solvent comprises at least one of a carbonate-based solvent, an ester-based solvent, an ether-based solvent, a ketone-based solvent, an alcohol-based solvent, or an aprotic solvent.

10. The electrolyte of any one of the preceding claims, wherein
the lithium salt comprises at least one of LiPF₆, LiBF₄, LiDFOP, LiDFOB, LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₚF₂ₚ₊₁SO₂)(C_{q}F_{2q+1}SO₂) (wherein, p and q are each independently an integer of 1 to 20), LiCl, Lil, or LiB(C₂O₄)₂ (lithium bis(oxalato) borate: LiBOB).

11. A rechargeable lithium battery, comprising:
a positive electrode comprising a positive electrode active material;
a negative electrode comprising a negative electrode active material; and
the electrolyte of any one of the preceding claims.

12. The rechargeable lithium battery of claim 11, wherein
the positive electrode active material is represented by Chemical Formula 3:
Chemical Formula 3 Liₐ₁₁Coₓ₁₁M¹¹_{y11}O₂,
and
wherein, in Chemical Formula 3,
0.9≤11≤1.8, 0.9≤x11≤1, 0≤y11≤0.1, x11+y11=1,
M¹¹ is at least one of Al, B, Ce, Cr, F, Mg, Mn, Mo, Nb, P, S, Si, Sr, Ti, V, W, Zr, or a combination thereof.

13. The rechargeable lithium battery of claim 11 or 12, wherein
the negative electrode active material comprises at least one of graphite or a Si composite.

14. The rechargeable lithium battery of claim 13, wherein
the negative electrode active material comprises the Si composite, and
the Si composite comprises a core comprising Si-containing particles and amorphous carbon.

15. The rechargeable lithium battery of claim 11, wherein
the negative electrode active material further comprises crystalline carbon.
